# EUROPEAN PATENT APPLICATION

(11) **EP 3 828 042 A1**
(43) Date of publication of application: **02.06.2021**
(21) Application number: 20210676.1
(22) Date of filing: 30.11.2020
(51) Int. Cl.: B60T 7/06, B60T 7/04, G05G 1/30, B62D 11/08, B60T 11/21

(54) **AUTOMATIC COUPLING SYSTEM FOR BRAKE PEDALS OF A WORK VEHICLE**

(30) Priority: 28.11.2019 IT 201900022416
(71) Applicant: CNH Industrial Italia S.p.A., 10135 Torino (IT)
(72) Inventor: ZÖTTL, Michael, 3352 St. Peter (AT); MONSCHEIN, Johann, 3351 Weistrach (AT)
(74) Representative: CNH Industrial IP Department

(57) **Abstract**

Brake pedals system (1) for a work vehicle, comprising a left brake pedal (2) and a right brake pedal (3), each of this latter being configured to be connected to a brake arrangement of the work vehicle to actuate respectively left and right brakes of this latter, the brake pedals system (1) comprising a coupling system (5) configured to selectively latch together left and right brake pedals (2, 3) in function of a predefined operative condition of the work vehicle.

## Description

### TECHNICAL FIELD

The present invention concerns a brake pedals system, in particular a brake pedals system comprising a coupling system for latching or unlatching brake pedals of a work vehicle such as an agricultural vehicle.

### BACKGROUND OF THE INVENTION

Work vehicles such as agricultural vehicles, e.g. tractors, are equipped with a steer-by-braking pedal arrangement, normally comprising two brake pedals configured to allow a so-called steer-by-braking function.

Indeed, in this type of brake pedal arrangement, if the driver depresses the one pedal only, the brake system only brakes the related side wheel, thus reducing the turn radius of the tractor, especially during headland manoeuvres.

At present, the two brake pedals comprise a driver-operated mechanical lock device for integrally connecting the pedals for on-road use or when the steer-by-braking function is not required.

Indeed, such mechanical lock should always be used when running on-road, to safeguard against the driver inadvertently depressing only one of the two pedals when the tractor is running at high speed, thus resulting in sharp swerving or even capsizing of the vehicle.

In other words, when running on-road, the two brake pedals are connected integrally by the lock device, and can only be depressed simultaneously to slow down or stop the vehicle as a whole.

This known solution, however has a fundamental drawback. Indeed, the driver often neglects to activate the lock device to connect the two brake pedals integrally before the vehicle gets up to speed, thus resulting, as stated, in highly dangerous situations in the event of braking at high velocities.

Such problem is known also for prior art documents, e.g. EP2093111 A1 into which a solution to such problem has been found by modifying the brake pedals shape.

Such solution is however expensive and needs a substantial modification of the existing brake pedals system. Moreover, the proposed solution cannot avoid all possible erroneous activation of the steer-by-braking functionality.

Therefore, the need is felt to further improve existing brake pedal systems for work vehicles in order to allow steer-by-braking function only at low velocities.

An aim of the present invention is to satisfy the above mentioned needs.

### SUMMARY OF THE INVENTION

The aforementioned aim is reached by a brake pedals system as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a brake pedals system comprising a coupling system according to the invention;

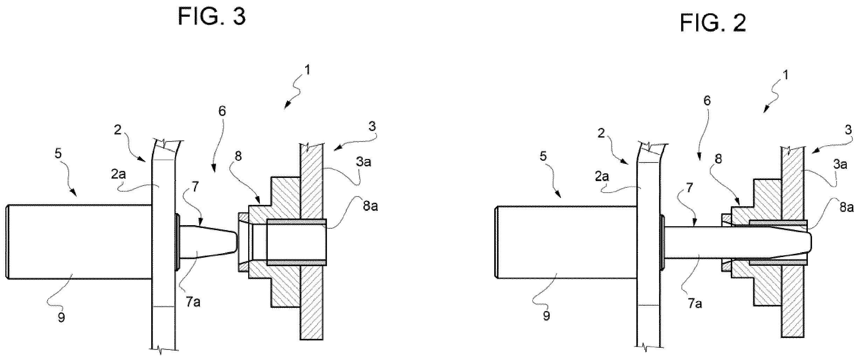

- Figure 2 is a partial sectioned front schematic view of a brake pedals system comprising a coupling system according to the invention in a first operational condition;
- Figure 3 is a partial sectioned front schematic view of a brake pedals system comprising a coupling system according to the invention in a second operational condition; and
- Figure 4 is a schematic diagram illustrating the steps of a control method for controlling a brake pedals system according to the invention.

### DETAILED DESCRIPTION OF THE INVENTION

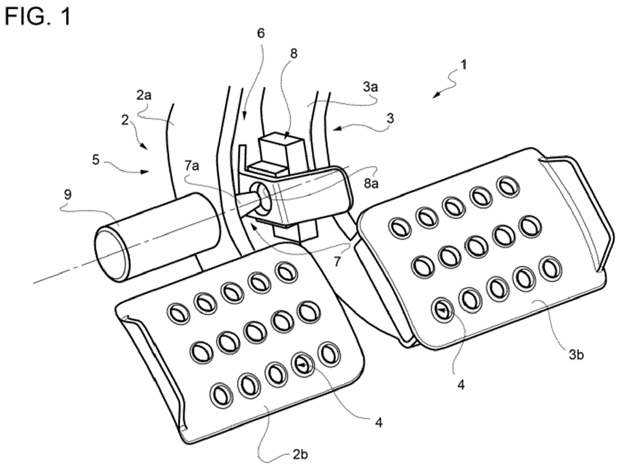

Figure 1 discloses a brake pedals system 1 for a work vehicle, e.g. an agricultural vehicle such as a tractor. The brake pedals system 1 comprises a left brake pedal 2 and a right brake pedal 3.

As known each pedal 2, 3 is configured to be pushed down mechanically by the user of the vehicle to provide an input to a brake arrangement (not shown), e.g. a hydraulic brake arrangement, configured to brake selectively the respective right and/or left brakes of the vehicle.

In the disclosed embodiment, each brake pedal 2, 3 comprises a leg 2a, 3a and a thrust plate 2b, 3b. Each leg 2a, 3a is provided with an upper portion connected to the brake arrangement of the vehicle and lower portion connected to the respective thrust plate 2b, 3b.

In the described exemplarily embodiment thrust plates 2b, 3b have a substantial rectangular flat shape and are provided with anti-slip means 4 such as protruding holes.

According to the invention, brake pedals system 1 comprises a coupling system 5 configured to couple together left and right brake pedals 2, 3 in function of a predefined operative condition of the work vehicle. Preferably, such operative condition comprises the fact that the velocity of the work vehicle and that a steer-by-brake functionality is required.

Preferably coupling system 5 comprises a mechanical coupling 6 configured to couple or uncouple brake pedals 2, 3 in function of the velocity of the work vehicle. In particular, mechanical coupling 6 comprises a male member 7 and a female member 8, one between the male and female member 7, 8 being actuated to couple with the respective element in function of the velocity of the work vehicle and on the fact that a steer-by-brake functionality is required.

Preferably, such actuation is an electronic actuation. Advantageously, work vehicle comprises an electronic control unit (no shown) electrically connected to the mechanical coupling 6 and configured to actuate this latter to couple or uncoupled brake pedals 2, 3 on the base of a predefined value of velocity of said vehicle and on the fact that a steer-by-brake functionality is required.

Such predefined value of velocity of said vehicle may be a maximum threshold value, e.g. 12kmh, above which brake pedals 2, 3 are coupled and under which brake pedals 2, 3 are uncoupled when the brake pedals 2,3 are both in a rest position. The fact that the steer-by-brake functionality is required may be a signal coming from operator's input, e.g. by a button. A check on the rest position of the brake pedals 2,3 may be acquired by known sensors, usually present on vehicles (e.g. for the activation of brake lights)

In the described exemplarily embodiment, the left pedal 2 comprises the male element 7 of the mechanical coupling 6 while the right pedal 3 comprises the female element 8. In particular, legs 2a, 3a carry male and female elements 7, 8, respectively in a position that does not interfere with the operation of brake pedals, 2, 3.

According to the described embodiment, both legs 3a, 2a defines a hole configured to house respectively the female element 8 and the male element 7. Preferably, such holes defined in legs 2a, 3a are coaxial, the male element 7 comprises a pin 7a, and female element 8 defines a housing 8a into which pin 7a may be housed, thereby coupling left and right legs 2a, 3a of brake pedals 2, 3.

Pin 7a is preferably housed into a casing 9 which is electrically actuated to push out pin 7a to cooperate with housing 8a or retract pin 7a thereby not allowing the aforementioned coupling.

Preferably such casing 9 comprises magnetic means (not shown) configured to magnetically retract or push out pin 7a from casing 9. Magnetic means may be designed so that in case of electronical failure in work vehicle, they automatically let pin 7a push out to couple with housing 8a.

Electronic control unit is electrically connected to the work vehicle to acquire data regarding its velocity, e.g. via CAN/BUS system of the work vehicle. Preferably, such electronic control unit is the ECU of the vehicle.

The operation of the coupling system 5 for coupling or uncoupling a brake pedals system 1 for a work vehicle as described above is the following.

When the vehicle is driving at a velocity greater than the maximum preset threshold and the coupling system 5 are in a unlatched status, then the electronic control unit first control if both said left and right brakes 2, 3 are in the rest position (namely brake pedals 2, 3 are not depressed) then said electronic control unit controls the coupling system 5 so that the male element 7 is coupled with female element 8, i.e. so that pin 7a is housed within housing 8a. Accordingly, pedals 2, 3 are latched in their movement and even if the operator will push only one between the two thrust plates 2b, 3b, they will be actuated together.

Conversely, when the vehicle is driving at a velocity lower than the maximum preset threshold, supposing that the user's vehicle has activated the steer-by-brake functionality and the brake pedals 2,3 are detected by the electronic control unit to be in the rest positions, then the electronic control unit control the status of coupling system 5, if the status is latched, then the electronic control unit controls the coupling system 5 so that the male element 7 is not coupled with female element 8, i.e. so that pin 7a is retracted within its housing 9 and the status of the coupling system 5 become unlatched. Accordingly, pedals 2, 3 are unlatched and when the operator will push only one between the two thrust plates 2b, 3b, only the respective brake will be activated, thereby allowing a steer-by-brake functionality.

In case of electronical failure in work vehicle, the system may be designed so that brake pedals 2, 3 are automatically latched, irrespectively of the status of the steer-to-brake functionality or of the velocity of the vehicle.

Preferably when the coupling system 5 passes from latched to unlatched status or vice versa, the driver may be warned by acoustic signals and/or flashing and/or lighting signals generated and/or visible in some part of the vehicle, for example the dashboard.

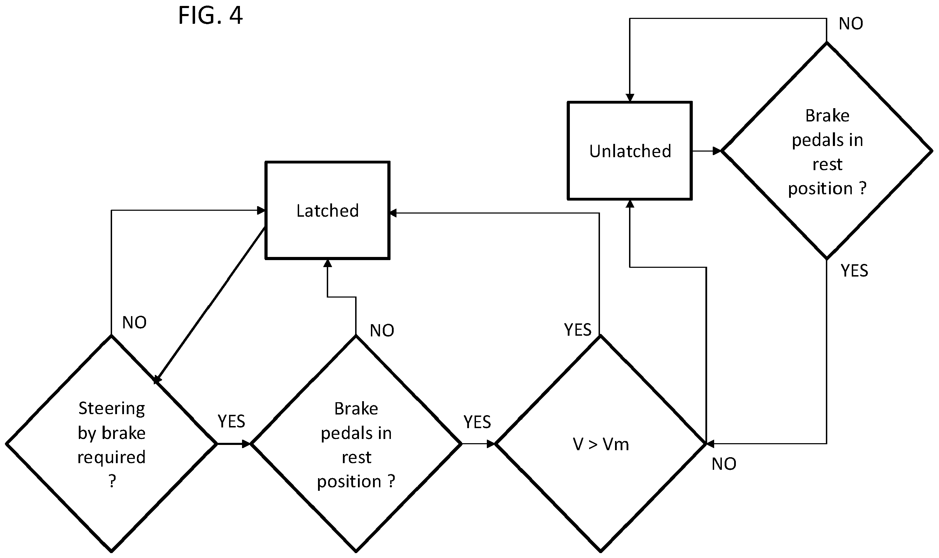

In view of the above, the present invention also relates to a method for uncoupling brake pedals 2, 3 of a work vehicle thanks to a system as disclosed above and schematically described in figure 4.

Such method comprises the following steps:
- Verifying that the brake pedals (2, 3) are in a latched status as initial step
- Verifying that a steer-to-brake functionality is required by the operator of the vehicle;
- If the steer-by-brake functionality is required, then the method passes to the following steps, otherwise brake pedals remains latched and returns to the initial step;
- Verify if both the brake pedals 2,3 are in their rest position, namely they are not depressed;
- If both the brake pedals 2, 3 are in rest position, then the method passes to the following steps otherwise brake pedals 2, 3 remains latched and returns back to initial step
- Verifying a preset condition of velocity of said vehicle;
- If the preset condition is met, then brake pedals 2, 3 remains latched and return back to initial step; and
- If the present condition is not met and brake pedals 2, 3 are in the rest position, then unlatch brake pedals 2, 3..

As said, the preset condition is the fact that a velocity of the vehicle is equal or greater than a present threshold velocity of the vehicle.

In view of the above, the present invention also relates to a method for coupling brake pedals 2, 3 of a work vehicle thanks to a system as disclosed above and schematically described in figure 4.

Such method comprises the following steps:
- Verifying that brake pedals 2, 3 are in a unlatched status as initial step;
- Verify if both the brake pedals 2,3 are in their rest position, namely they are not depressed;
- If both the brake pedals 2, 3 are in rest position, then the method passes to the following steps otherwise brake pedals 2, 3 remains unlatched and returns to the initial step
- Verifying a preset condition of velocity of said vehicle;
- If the present condition is met and brake pedals 2, 3 are in the rest position, then latch brake pedals 2, 3.
- If the preset condition is not met, then brake pedals remains unlatched and return to the initial step;

As said, the preset condition is the fact that a velocity of the vehicle is equal or greater than a present threshold velocity of the vehicle.

Both the proposed methods may advantageously comprise an additional step, parallel to all the aforementioned steps, in case of electronical failure in work vehicle, of latching together brake pedals 2, 3, irrespectively of the status of the steer-to-brake functionality or of the velocity of said vehicle or further of brakes position.

The resting position (namely brake pedals 2,3 are not depressed) of pedals may be acquired by known sensors, usually present on vehicles (e.g. for the activation of brake lights).

The electronic control unit advantageously comprises elaboration means configured to the aforementioned steps of the proposed control methods.

In view of the foregoing, the advantages of a brake pedals system 1 comprising a coupling system 5 according to the invention are apparent.

The proposed brake pedals system 1 comprising the coupling system 5 allows to automatically latch or unlatch brake pedals when needed.

Accordingly, if the user of the work vehicle selects the steer-by-brake functionality, pedals 2,3 will be latched or unlatch automatically, avoiding any improper braking of the vehicle at high velocity.

The proposed coupling system is moreover compact, economic and can be easily mounted and integrated also in already existing vehicles.

It is clear that modifications can be made to the described brake pedals system 1 comprising a coupling system 5 which do not extend beyond the scope of protection defined by the claims.

For example, it is clear that the described mechanical coupling 6 is exemplarily, such as the shape of brakes pedals 2, 3 or the proposed velocity threshold value.

Furthermore, for sake of controlling the latching or unlatching of brake pedals 2, 3, the control unit 8 may take into account additional quantities representative of an operative condition of the vehicle.

## Claims

1. Brake pedals system (1) for a work vehicle, said brake pedals system (1) comprising a left brake pedal (2) and a right brake pedal (3) being both configured to be connected to a brake arrangement of said work vehicle to actuate respectively left and right brakes, said brake pedals system (1) comprising a coupling system (5) configured to latch together said left and right brake pedals (2, 3) in function of a predefined operative condition of said work vehicle.

2. Brake pedals system according to claim 1, wherein said coupling system (5) comprises a mechanical coupling (6) for said selectively coupling between said left and right brake pedals (2, 3).

3. Brake pedals system according to claim 2, wherein said mechanical coupling (6) comprises a male element (7) carried by one between said left and right brake pedals (2, 3) and a female element (8) carried by the other between said left and right brake pedals (2, 3), said male and female elements (7, 8) being configured to selectively couple together to selectively latch said left and right brake pedals (2, 3) together.

4. Brake pedals system according to claim 3, wherein said male element (7) comprises a pin (7a) and said female element (8) defines a hosing (8a) configured to house said pin (7a).

5. Brake pedal system according to claims 3 or 4, comprising an electronic control unit electrically connected to said mechanical coupling (6) and configured to control the coupling between said male element (7) together with said female element (8).

6. Brake pedal system according to claim 5, when depending on claim 4, wherein said pin (7a) is carried by a housing comprising magnetic means configured to push out or retract said pin (7a) with respect to said housing according to the control of said electronic control unit.

7. Brake pedal system according to claim 6, wherein said magnetic means are configured to push out said pin (7a) when an electric failure on said work vehicle is detected.

8. Brake pedal system according to any preceding claims, wherein said predefined operative condition comprises the need of activating a steer-to-brake functionality and a check that the acquired velocity of said work vehicle is lower or greater than a preset velocity threshold.

9. Method for uncoupling left and right brake pedals (2, 3) of a work vehicle in a brake pedal system as described in any of the preceding claims, such method comprising the following steps:
• Verifying that the brake pedals (2, 3) are in a latched status as initial step;
• Verifying that a steer-to-brake functionality is required by the operator of said work vehicle;
• If the steer-by-brake functionality is required, then the method passes to the following steps, otherwise left and right brake pedals (2, 3) remains latched together and return to the initial step;
• If the preset velocity condition is met, left and right brake pedals (2, 3) remains latched together and return to the initial step; otherwise left and right brake pedals (2, 3) are unlatched.

10. Method for coupling left and right brake pedals (2, 3) of a work vehicle in a brake pedal system as described in any of the preceding claims from 1 to 9, such method comprising the following steps:
• Verifying that the brake pedals (2, 3) are in the unlatched status as initial step;
• Verify if both the brake pedals 2,3 are in their rest position;
• If both the brake pedals 2, 3 are in rest position, then the method passes to the following steps otherwise brake pedals 2, 3 remains unlatched and return to initial step;
• Verifying a preset condition of velocity of said vehicle;
• If the present condition is met then brake pedals (2, 3) are latched otherwise brake pedals (2,3) remains unlatched and return to the initial step.

11. Method according to claim 9 or 10, wherein the preset velocity condition is considered met when an acquired velocity of said work vehicle is greater than a preset velocity threshold.

12. Method according to any of claims 9 to 11, further comprising an additional step, parallel to all the aforementioned steps, that in case of electronical failure in said work vehicle, latches together brake pedals (2, 3) irrespectively of the status of said steer-to-brake functionality or of said velocity of said vehicle.
